# FASCICULE DE BREVET EUROPEEN

(11) **EP 3 650 160 B1**
(45) Date de publication et mention de la délivrance du brevet: **28.04.2021**
(21) Numéro de dépôt: 19207249.4
(22) Date de dépôt: 05.11.2019
(51) Int. Cl.: B23K 26/04, B23K 26/14

(54) **TÊTE DE SOUDAGE ET/OU DE DÉCOUPE ET DISPOSITIF DE SOUDAGE ET/OU DE DÉCOUPE COMPRENANT UNE TELLE TÊTE**
SCHWEISS- UND/ODER SCHNEIDEKOPF UND SCHWEISS- ODER SCHNEIDEVORRICHTUNG, DIE EINEN SOLCHEN KOPF UMFASST
HEAD FOR WELDING AND/OR CUTTING AND DEVICE FOR WELDING AND/OR CUTTING COMPRISING SUCH A HEAD

(30) Priorité: 08.11.2018 FR 1860264
(43) Date de publication de la demande: 13.05.2020
(73) Titulaire: Commissariat à l'énergie atomique et aux énergies alternatives, 75015 Paris (FR)
(72) Inventeur: FONDANT, Gilles, 91380 CHILLY-MAZARIN (FR)
(74) Mandataire: Brevalex

(56) Documents cités:
- WO-A1-2015/132170
- FR-A1- 2 973 726
- JP-A- H05 220 576
- SU-A1- 1 342 646

## Description

### DOMAINE TECHNIQUE

L'invention concerne les dispositifs de soudage et/ou de découpe laser et concerne plus particulièrement les têtes de soudage et/ou de découpe équipant de tels dispositifs.

L'invention a ainsi pour objet une tête de soudage et/ou de découpe et un dispositif de soudage et/ou de découpe comprenant une telle tête.

### ÉTAT DE LA TECHNIQUE ANTÉRIEURE

Les procédés de soudage et/ou de découpe laser sont généralement basés sur une combinaison d'un laser et d'au moins un additif, tel que par exemple le matériau de soudure, un flux de soudure, ou encore un gaz d'assistance. Cette combinaison est généralement fournie par une tête de soudure et/ou de découpe adaptée.

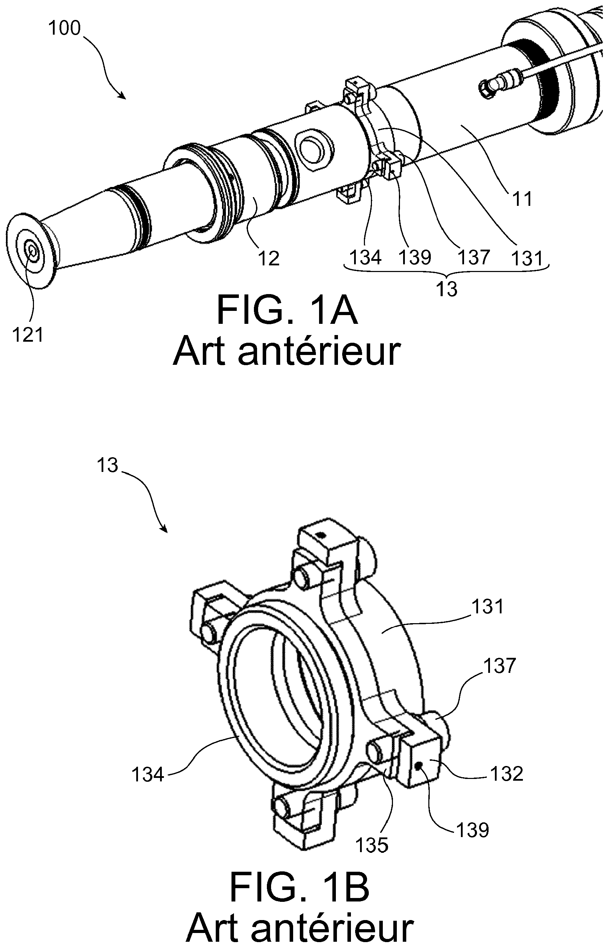

Une tête de découpe et/ou de soudure laser d'un tel dispositif comprend généralement, comme illustré sur la figure 1A :
- un système optique 11, tel qu'un bloc optique, agencé pour fournir un rayonnement laser apte à permettre le soudage et/ou la découpe, le rayonnement laser étant fourni en sortie du système optique 11 le long d'un axe optique du système optique non figuré,
- une buse de sortie 12 agencée en sortie du système optique 11 pour combiner le rayonnement laser avec un additif, tel que de la soudure ou un gaz d'assistance, au niveau d'un orifice de sortie 121 de la buse de sortie 12,
- un système d'alignement 13 agencé entre le système optique 11 et la buse de sortie 12 pour permettre un alignement de l'orifice de sortie 121 de la buse de sortie avec l'axe optique du système optique 11.

Le système d'alignement 13 comprend, comme illustré sur la figure 1B, pour permettre un tel alignement :
- une première bague 131 fixée au système optique, la bague comprenant, réparties circonférentiellement, quatre pattes 132 de fixation et de réglage, chaque patte présentant une première partie s'étendant perpendiculairement à un axe de symétrie de la première bague et une deuxième partie, formant butée, s'étendant parallèlement à ce même axe, la première partie étant munie d'un orifice de fixation traversant et la deuxième partie étant munie d'un orifice de réglage fileté traversant pour recevoir une vis de réglage 139,
- une deuxième bague 134 fixée à la buse de sortie 12, la deuxième comprenant, réparties circonférentiellement, quatre pattes 135 s'étendant perpendiculairement à un axe de symétrie de la deuxième bague 134 et complémentaires chacune à une patte respective de la première bague 131, chaque patte comprenant un orifice fileté pour recevoir une vis de blocage 137 respective reçue dans l'orifice de fixation correspondant, la deuxième bague 134 étant agencée de telle façon que ses pattes 135 viennent en appui sur la première partie de la patte 132 correspondante de la première bague 131 en présentant une surface d'appui en regard de la deuxième partie de cette même patte 132,
- les quatre vis de blocage 137 reçues dans l'orifice de blocage correspondant en étant vissées dans l'orifice fileté correspondant,
- les quatre vis de réglage 139 vissées dans l'orifice de réglage correspondant et en appui sur la surface d'appui de la patte 135 correspondant à la deuxième bague 134.

Afin de permettre un réglage fin pour aligner la buse de sortie par rapport à l'axe optique du système optique, les orifices de blocage sont volontairement sur-dimensionnées et permettent, lorsque les vis de blocage 137 sont partiellement dévissées, un décalage de la deuxième bague 134 vis-à-vis de la première bague 131. Le réglage de ce décalage se fait simplement par vissage et un dévissage de respectivement d'une vis de réglage 139 et de la vis de réglage 139 antagoniste. Ainsi il est possible d'aligner l'orifice de sortie avec l'axe optique du système optique et ainsi de compenser les éventuelles imperfections concernant l'usinage des éléments optiques du système optique 11 et/ou des éléments support de la buse de sortie.

Néanmoins, s'il est possible d'obtenir un réglage fin avec un tel système d'alignement 13 celui-ci est relativement volumineux et est difficile à régler. En effet, avec un tel système d'alignement, le réglage selon une direction aura nécessairement une incidence sur le réglage selon la direction perpendiculaire, l'ensemble étant déplacé selon un plan perpendiculaire à l'axe optique du système optique. Cet état de la technique, également illustré par le document WO2015/132170, forme la base pour le préambule de la revendication 1.

On notera qu'il est également connu du document FR2973726 des systèmes d'alignement permettant de faciliter l'alignement axial d'un faisceau laser, en sortie d'une fibre optique, avec un orifice de sortie d'une tête de découpe laser.

### EXPOSÉ DE L'INVENTION

Ainsi l'invention a pour but de résoudre les inconvénients ci-dessus et a ainsi pour objet de fournir une tête de soudage et/ou de découpe laser dont le système d'alignement puisse être moins volumineux tout en présentant un réglage facilité de l'alignement entre la buse de sortie et le système optique.

L'invention concerne à cet effet une tête de soudage et/ou de découpe laser comprenant :
- un système optique, tel qu'un bloc optique, agencé pour fournir un rayonnement laser apte à permettre le soudage et/ou la découpe, le rayonnement laser étant fourni en sortie du système optique le long d'un axe optique du système optique,
- une buse de sortie agencée en sortie du système optique pour combiner le rayonnement laser avec un additif, tel que de la soudure ou un gaz neutre au niveau d'un orifice de sortie de la buse,
- un système d'alignement agencé entre le système optique et la buse pour permettre un alignement de l'orifice de sortie de la buse avec l'axe optique du système optique.

Le système d'alignement comprend une liaison rotule liant la buse de sortie au système optique avec le centre de la rotule qui est confondu avec l'axe optique du système optique.

Le système d'alignement comprend :
- une première bague fixée au système optique, ladite première bague comprenant une face externe opposée au système optique et formant une première portée sphérique,
- une deuxième bague fixée sur la première bague et comprenant une face interne en regard de la face externe et formant une deuxième portée sphérique complémentaire à la première portée sphérique,
   la buse de sortie comprenant sur une extrémité en regard du système optique une collerette s'étendant à partir du reste de la buse de sortie selon un plan sphérique correspondant à celui de la première et la deuxième portée sphérique, la collerette étant en partie logée entre la première et la deuxième bague en appui glissant sur chacune des première et deuxième portées sphériques.

Une telle liaison rotule, le système d'alignement permet d'assurer, quel que soit la direction du réglage, un maintien du centre de la rotule centrée vis-à-vis de l'axe optique du système optique ceci avec un encombrement réduit puisqu'il ne nécessite pas de pattes, comme c'est le cas de l'art antérieur et qu'une rotule peut présenter un dimensionnement plus faible qu'un système à décalage de l'art antérieur. Ainsi, lors d'un réglage le long d'une direction, le réglage se fait par une rotation autour du centre de la rotule quelle que soit la direction du déplacement, permettant de fait de conserver le réglage réalisé sur un axe perpendiculaire à ladite direction du déplacement.

Ainsi, une telle tête de soudage et/ou de découpe peut présenter un système d'alignement moins volumineux que ceux de l'art antérieur tout en facilitant le réglage de l'alignement entre la buse de sortie et le système optique.

De plus, l'utilisation de deux bagues et d'une buse comprenant une telle collerette permet la fourniture d'un système d'alignement particulièrement compact.

L'une de la première et de la deuxième bague peut comprendre au moins un élément de blocage configuré pour fixer la collerette sur l'autre parmi la deuxième et la première bague en mettant la collerette en appui sur la portée sphérique parmi la première et la deuxième portée sphérique qui correspond à l'autre parmi la deuxième et la première bague.

Un tel élément de blocage assure une conservation de l'alignement de la tête de soudage et/ou de découpe laser et donc réduit les risques d'endommagement de la tête laser qui pourrait découler d'un éventuelle désalignement.

L'élément de blocage peut comprendre au moins une vis de blocage, préférentiellement au moins trois, voire quatre, configurée pour venir en appui sur une face de la collerette qui est en regard de l'une parmi la première et la deuxième bague afin de mettre en appui la collerette sur la portée sphérique parmi la première et la deuxième portée sphérique qui correspond à l'autre parmi la deuxième et la première bague.

Un tel système de vis de blocage permet une sécurisation de l'alignement de la tête de soudage et/ou de découpe laser et donc réduit les risques d'endommagement de la tête laser qui pourrait découler d'un éventuel désalignement.

L'une parmi la première et la deuxième bague peut être la deuxième bague, l'autre parmi la deuxième et la première bague étant la première bague.

La collerette peut être en appui sur chacune de la première et de la deuxième portée sphérique au moyen de surfaces d'appui respectives, la collerette comprenant en outre une surface radiale sensiblement perpendiculaire aux surfaces d'appui et opposée à l'axe optique,
une première parmi la première et la deuxième bague pouvant être munies de quatre vis de réglage réparties circonférentiellement en regard de la surface radiale de la collerette, lesdites vis de réglages venant en appui de la surface radiale de la collerette.

De telles vis de réglage assurent un réglage fin de l'alignement de la buse de sortie vis-à-vis de l'axe optique du système optique.

Le système d'alignement peut comprendre un premier élément d'accouplement configuré pour s'accoupler à un deuxième élément d'accouplement de la buse de sortie ceci de manière à autoriser une substitution de la buse de sortie par une autre buse de sortie.

Un tel système d'alignement permet un changement rapide de buse de sortie ceci pour, notamment et par exemple, passer d'une buse de sortie adaptée à réaliser une soudure à une buse de sortie adaptée pour réaliser une découpe ou vice versa.

L'invention a également pour objet une unité de soudage et/ou de découpe laser comprenant :
- une tête de soudage et/ou de découpe laser selon l'invention, le système optique étant couplé à une source laser de l'unité de soudage,
- un circuit de de commande configuré pour commander la source laser.

Une telle unité de soudage et/ou de découpe laser, en comprenant une tête de soudage selon l'invention, bénéficie des avantages qui y sont liés.

La tête de soudage et/ou de découpe laser peut être une tête de soudage et de découpe laser selon l'invention, la tête de soudage et/ou de découpe laser étant l'une choisie parmi une tête de soudage et une tête de découpe, et l'unité de soudage et/ou de découpe comprenant en outre une buse de sortie supplémentaire apte à fournir, lorsqu'elle est substituée à la buse de sortie une autre choisie parmi une tête de soudage et une tête de découpe, ladite buse de sortie supplémentaire étant munie d'un deuxième élément d'accouplement complémentaire au premier élément d'accouplement du système d'alignement.

Une telle unité de soudage et/ou découpe permet de passer rapidement d'une configuration adaptée pour effectuer une soudure à une configuration adaptée pour effectuer une découpe laser.

L'invention concerne en outre un procédé de fabrication d'une tête de soudage et/ou de découpe laser selon l'invention, comprenant les étapes suivantes :
- fourniture du système optique,
- fourniture de la buse de sortie,
- fourniture du système d'alignement,
- assemblage du système optique avec la buse de sortie au moyen du système d'alignement, le système d'alignement comprenant une liaison rotule liant la buse de sortie au système optique avec le centre de la rotule qui est confondu avec l'axe optique du système optique.

Lors de l'étape d'assemblage du système optique, la liaison rotule est fournie par :
- une première bague fixée au système optique, ladite première bague comprenant une face externe opposée au système optique et formant une première portée sphérique,
- une deuxième bague fixée sur la première bague et comprenant une face interne en regard de la face externe et formant une deuxième portée sphérique complémentaire à la première portée sphérique,
- dans laquelle la buse de sortie comprend sur une extrémité en regard du système optique une collerette s'étendant à partir du reste de la buse de sortie selon un plan sphérique correspondant à celui de la première et la deuxième portée sphérique, la collerette étant en partie logée entre la première et la deuxième bague en appui glissant sur chacune des première et deuxième portées sphériques.

Un tel procédé de fabrication permet la fourniture d'une tête de soudage et/ou de découpe laser selon l'invention et donc de bénéficier des avantages correspondants.

L'invention concerne en outre Procédé d'alignement d'une tête de soudage et/ou de découpe selon l'invention, le procédé comprenant les étapes suivantes :
- fournir, au moyen du système optique un rayonnement optique de relativement faible énergie vis-à-vis d'un rayonnement laser du système optique apte à permettre une soudure et/ou une découpe,
- déplacement de la buse de sortie par rapport au système optique, ceci au moyen de la liaison rotule fournie par ledit système d'alignement, pour aligner l'orifice de sortie de la buse de sortie avec l'axe optique du système optique,
- configuration du système optique pour l'émission d'un rayonnement optique apte à permettre un soudage et/ou une découpe laser.

Un tel procédé d'alignement bénéficie des avantages liés à l'utilisation d'une tête de soudage et/ou de découpe laser selon l'invention.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- les figures 1A et 1B illustrent respectivement une tête de soudage et/ou découpage laser selon l'art antérieur et un système d'alignement équipant une telle tête de soudage et/ou découpe laser,
- la figure 2 illustre une tête de soudage et/ ou découpe laser selon l'invention,
- la figure 3 illustre en vue partiellement en coupe, un ensemble buse de sortie/système d'alignement d'une tête de soudage et/ou découpe laser illustrée sur la figure 2,
- la figure 4 illustre une unité de soudage et/ou de découpe laser comprenant une tête de soudage selon l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

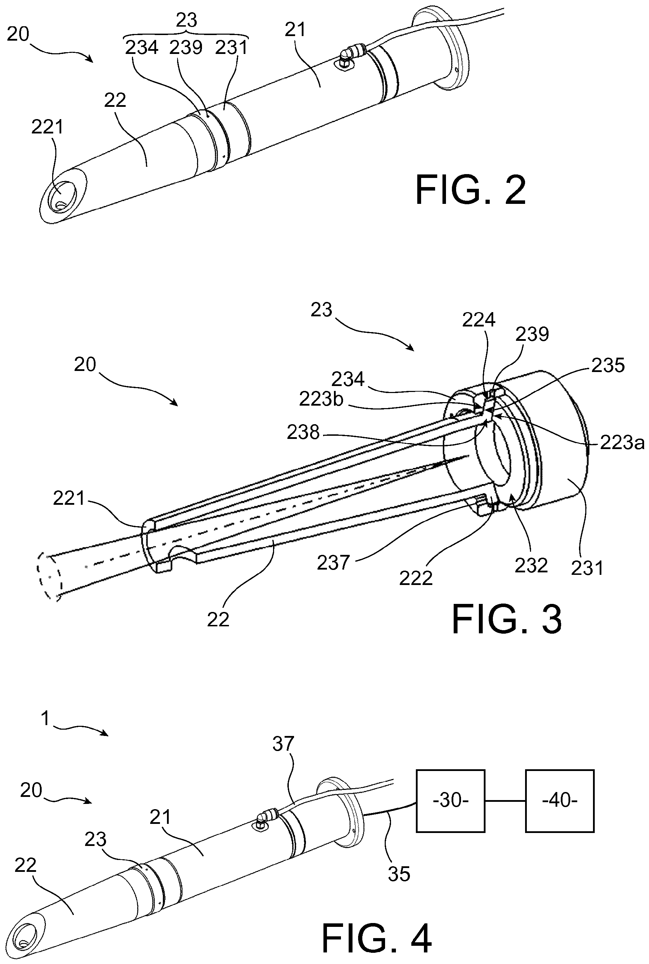

La figure 2 illustre une tête de soudage et/ou de découpe laser 20 selon l'invention, une telle tête de soudage pouvant être réglée de manière facilitée vis-à-vis de l'art antérieur illustré sur les figures 1A et 1B.

Une telle tête de soudage et/ou de découpe laser 20 comprend :
- un système optique, qui est ici fourni par un bloc optique 21, agencé pour fournir un rayonnement laser apte à permettre le soudage et/ou la découpe, le rayonnement laser étant fourni en sortie du bloc optique le long d'un axe optique du bloc optique 21,
- une buse de sortie 22 agencée en sortie du bloc optique 21 pour combiner le rayonnement laser avec au moins un additif, tel qu'un gaz neutre, non illustré, au niveau d'un orifice de sortie 221 de la buse sortie 22,
- un système d'alignement 23 agencé entre le bloc optique 21 et la buse de sortie 22 pour permettre un alignement de l'orifice de sortie 221 de la buse de sortie 22 avec l'axe optique du bloc optique 21.

Que ce soit le bloc optique 21 ou la buse de sortie 22, ceux-ci sont déjà connus de l'art antérieur et ils ne font pas, si ce n'est de par leur adaptation à être accouplés à un système d'alignement selon l'invention, l'objet du présent document. Ainsi, en ce qui concerne les caractéristique intrinsèque des blocs optique 21 et de la buse de sortie 22, il est renvoyé aux documents de l'art antérieur et aux connaissances générales de l'homme du métier.

On notera néanmoins que, dans le présent mode de réalisation, le bloc optique 21 est connecté à une source laser 30, comme cela sera décrit plus avant en lien avec la figure 4, par une fibre optique 35, et qu'elle comporte un certain nombre d'éléments optiques, tels que des lentilles non illustrées et un système de refroidissement alimenté , pour fournir en sa sortie un faisceau laser dirigé selon l'axe optique du bloc optique 21 comme illustré sur la figure 2. Typiquement, la source laser 30 peut être une source laser infrarouge présentant une raie d'émission laser à 1030 nm. Bien entendu, l'invention ne se limite pas à ce seul type de source laser.

De même, on notera que la buse de sortie 22 illustré sur la figure 2, contrairement à celle illustrée sur la figure 3, est une buse de sortie à 90°, c'est-à-dire qu'elle comporte un système de déviation optique, tel qu'un miroir, pour dévier le rayonnement laser selon une direction perpendiculaire de l'axe optique et ainsi permettre un soudage et/ou une découpe en des emplacements peu accessibles.

On notera également, en conformité, avec les connaissances de l'homme du métier, que l'additif pour lequel la buse de sortie 22 est agencée pour coupler au rayonnement laser est choisie parmi, lorsque la tête soudage et/ou de découpe laser 20 est une tête de soudage, un matériau de soudage, un flux de soudage, un gaz d'inertage, et parmi, lorsque la tête de soudage et/ou de découpe laser 20 est une tête de découpe, un gaz d'assistance ou un liquide d'assistance.

Le système d'alignement 23 comprend, comme illustré sur la figure 3 :
- une première bague 231 fixée au système optique 21, ladite première bague 231 comprenant une face externe opposée au système optique 21 et formant une première portée sphérique 232,
- une deuxième bague 234 fixée, par exemple, par vissage, à la première bague 231 et comprenant une face interne en regard de la face externe et formant une deuxième portée sphérique 235 complémentaire à la première portée sphérique 232.

En complément au système d'alignement, la buse de sortie 22 comprend sur une extrémité en regard du bloc optique 21 une collerette 211 s'étendant à partir du reste de la buse de sortie 22 selon un plan sphérique correspondant à celui de la première et la deuxième portée sphérique 232, 235, la collerette 222 étant en partie logée entre la première et la deuxième bague 231, 234 en appui glissant sur chacune des première et deuxième portées sphériques 232, 235.

De cette manière, les première et deuxième bagues 231, 234, en complément avec la collerette 222, fournissent une liaison rotule liant la buse de sortie 22 au bloc optique 21 avec le centre de la rotule qui est confondu avec l'axe optique du système optique 21.

Plus précisément, la première bague 231 présente une forme sensiblement tubulaire avec, une première extrémité destinée à être fixée au bloc optique et une deuxième extrémité présentant un premier moyen de fixation, tel qu'un filetage, pour permettre une fixation de la deuxième bague 234, et la première portée sphérique 232 s'étendant à l'extrémité dudit filetage.

De la même façon, la deuxième bague 234 présente une forme annulaire avec une section circulaire en L, un premier bras du L s'étendant parallèlement à l'axe optique 21 et un deuxième bras du L s'étendant, à partir d'une extrémité du premier bras opposé au bloc optique perpendiculairement à l'axe optique en direction de ce dernier. La deuxième bague comporte sur le premier bras du L en regard de l'axe optique, un deuxième moyen de fixation, tel qu'un taraudage, complémentaire au premier moyen de fixation. Le deuxième bras comporte, sur une face qui est en regard de la première portée sphérique, la deuxième portée sphérique 235. Avec une telle configuration, le premier bras, les première et deuxième portées sphériques 232, 235 forment un logement 238 pour loger au moins partiellement la collerette 222.

Ainsi, la collerette 222 est en appui sur chacune de la première et de la deuxième portée sphérique 232, 235 au moyen de surfaces d'appui respectives (223a, 223b), la collerette 222 comprenant en outre une surface radiale 224 sensiblement perpendiculaire aux surfaces d'appui 223a, 223b et opposée à l'axe optique.

Afin de permettre un blocage en position de la buse de sortie 22 vis-à-vis du bloc optique 21, la deuxième bague 234 comprend quatre orifices de fixation traversants et filetés, lesdits orifices de fixation étant répartis circulairement sur le pourtour du premier bras du L en débouchant dans le logement 238.

Le système d'alignement comprend en outre quatre vis de blocage 237 vissées chacune dans un orifice de fixation respectif et configurées pour venir en appui sur une face de la collerette 222 qui est en regard du deuxième bras du L de la deuxième bague 234 afin de mettre en appui la collerette 222 sur la première portée sphérique 232.

Bien entendu, en variante, il est également envisageable, sans que l'on sorte du cadre de l'invention, que les orifices de fixation soient aménagés sur la première bague 231 et que les vis de blocage 239, visées dans lesdits orifices de fixation, soient configurées afin de mettre en appui la collerette 222 sur la deuxième portée sphérique 235.

La deuxième bague comprend en outre quatre orifices de réglage filetés accueillant chacun une vis de réglage 239 respective du système d'alignement 20, lesdits orifices de réglage étant répartis circonférentiellement en regard de la surface radiale 224 de la collerette 222. Les vis de réglages, vissées dans lesdits orifices de réglage, viennent ainsi en appui de la surface radiale 224 de la collerette 222. De cette manière, les vis de réglage 239 sont réparties par paires de vis coaxiales fonctionnant de manière antagoniste, le réglage selon un axe étant obtenu en vissant une vis de réglage 239 et en dévissant la vis de réglage 289 antagoniste. On notera que, selon le principe de l'invention, le ré

Comme illustré sur la figure 5, une telle tête de soudure et/ou de découpage laser 20 est adaptée pour être associé à une source laser 30, ceci au moyen d'une fibre optique 35, et un circuit de commande 40 configuré pour commander la source laser 30 de manière à fournir une unité de soudage et/ou de découpe laser 1.

Selon une possibilité avantageuse de l'invention non illustrée, la tête de soudage et/ou de découpe laser 20 étant une choisie parmi une tête de soudage et une tête de découpe, et l'unité de soudage et/ou de découpe laser 1 peut comprenant en outre une tête de soudage et/ou de découpe supplémentaire apte à fournir, lorsqu'elle est substituée à la buse de sortie une autre choisie parmi une tête de soudage et une tête de découpe du système d'alignement. Selon cette possibilité, il est possible de prévoir que le système d'accouplement comprenne un premier élément d'accouplement configuré pour s'accoupler à un deuxième élément d'accouplement de la buse de sortie 23 et de la buse de sortie supplémentaire ceci de manière à autoriser une substitution de la buse de sortie 23 par la buse de sortie supplémentaire.

On notera que dans ce cas-là, par exemple, il est possible que la collerette 222 de la buse de sortie 20 équipe une troisième bague du système d'alignement, la troisième bague comprenant le premier élément d'accouplement et chacune de la buse de sortie et de la buse de sortie supplémentaire comprenant le deuxième élément d'accouplement complémentaire au premier élément d'accouplement.

Une tête de soudage et/ou découpe laser 20 selon le principe de l'invention, peut être alignée au moyen d'un procédé d'alignement comprenant les étapes suivantes :
- fourniture, au moyen du bloc optique 21 et de l'éventuelle source laser, d'un rayonnement optique de relativement faible énergie vis-à-vis d'un rayonnement laser du système optique apte à permettre une soudure et/ou une découpe,
- dévissage des vis de blocage 237 afin d'autoriser l'alignement entre la buse de sortie 22 et le bloc optique 21,
- déplacement de la buse de sortie 22 par rapport au système optique 21, ceci au moyen de la liaison rotule fournie par ledit système d'alignement, de manière à faire passer le rayonnement optique par l'orifice de sortie 221, le déplacement étant réalisé au moyen des vis de réglage 239,

- revissage des vis de blocage afin de pérenniser l'alignement ainsi réglé,
- configuration du système optique 21 et de l'éventuelle source laser pour l'émission d'un rayonnement laser apte à permettre un soudage et/ou une découpe.

L'unité de soudage et/ou de découpe 1 est ainsi apte à effectuer un soudage ou une découpe.

On notera également qu'une tête de soudage et/ou de découpe laser selon l'invention peuvent être fournie au moyen d'un procédé de fabrication comprenant les étapes suivantes :
- fourniture du bloc optique 21,
- fourniture des première et deuxième bagues 231, 234,
- fixation de la première bague au bloc optique 21,
- fourniture de la buse de sortie 22,
- assemblage de la buse de sortie 22 avec la première bague 231, la collerette 222 étant en appui sur la sur le premier plan sphérique,
- fixation de la deuxième bague 234 sur la première bague 231 de telle façon que la collerette 222 se retrouve au moins en partie logée entre le premier plan sphérique 232 et le deuxième plan sphérique 235,
- installation des vis de réglage 239 et des vis de blocage 237.

## Revendications

1. Tête de soudage et/ou de découpe laser (20) comprenant :
- un système optique (21), tel qu'un bloc optique, agencé pour fournir un rayonnement laser apte à permettre un soudage et/ou une découpe, le rayonnement laser étant fourni en sortie du système optique (21) le long d'un axe optique du système optique (21),
- une buse de sortie (22) agencée en sortie du système optique (21) pour combiner le rayonnement laser avec au moins un additif, tel que de la soudure ou un gaz neutre au niveau d'un orifice de sortie (221) de la buse de sortie (22),
- un système d'alignement (23) agencé entre le système optique (21) et la buse de sortie (22) pour permettre un alignement de l'orifice de sortie (221) de la buse de sortie (22) avec l'axe optique du système optique (21),
le système d'alignement (23) comprenant une liaison rotule liant la buse de sortie (22) au système optique (21) avec le centre de la rotule qui est confondu avec l'axe optique du système optique (21),
la tête de soudage et/ou de découpe laser (20) étant **caractérisée en ce que** le système d'alignement (23) comprend :
- une première bague (231) fixée au système optique (21), ladite première bague (231) comprenant une face externe opposée au système optique (21) et formant une première portée sphérique,
- une deuxième bague (234) fixée sur la première bague (231) et comprenant une face interne en regard de la face externe et formant une deuxième portée sphérique (235) complémentaire à la première portée sphérique (232),
dans laquelle la buse de sortie (22) comprend sur une extrémité en regard du système optique (21) une collerette s'étendant à partir du reste de la buse de sortie (22) selon un plan sphérique correspondant à celui de la première et la deuxième portée sphérique, la collerette (222) étant en partie logée entre la première et la deuxième bague en appui glissant sur chacune des première et deuxième portées sphériques (232, 235).

2. Tête de soudage et/ou de découpe laser (20) selon la revendication 1, dans laquelle, l'une de la première et de la deuxième bague (231, 234) comprend au moins un élément de blocage configuré pour fixer la collerette (222) sur l'autre parmi la deuxième et la première bague (234, 231) en mettant la collerette (222)en appui sur la portée sphérique parmi la première et la deuxième portée sphérique (231, 235) qui correspond à l'autre parmi la deuxième et la première bague (234, 231).

3. Tête de soudage et/ou de découpe laser (20) selon la revendication 2, dans laquelle l'élément de blocage comprend au moins une vis de blocage (237), préférentiellement au moins trois, voire quatre, configurée pour venir en appui sur une face de la collerette (222) qui est en regard de l'une parmi la première et la deuxième bague (231, 234) afin de mettre en appui la collerette (222) sur la portée sphérique parmi la première et la deuxième portée sphérique (231, 235) qui correspond à l'autre parmi la deuxième et la première bague (234, 231).

4. Tête de soudage et/ou de découpe laser (20) selon la revendication 2 ou 3, dans laquelle l'une parmi la première et la deuxième bague (231, 234) est la deuxième bague (234), l'autre parmi la deuxième et la première bague (234, 231) étant la première bague (231).

5. Tête de soudage et/ou de découpe laser (20) selon l'une quelconque des revendications 1 à 3, dans laquelle la collerette (222) est en appui sur chacune de la première et de la deuxième portée sphérique (232, 235) au moyen de surfaces d'appui respectives (223a, 223b), la collerette (222) comprenant en outre une surface radiale (224) sensiblement perpendiculaire aux surfaces d'appui (223a, 223b) et opposée à l'axe optique,
dans lequel une première parmi la première et la deuxième bague (231, 234) est munies de quatre vis de réglage (239) réparties circonférentiellement en regard de la surface radiale (224) de la collerette (222), lesdites vis de réglages venant en appui de la surface radiale (224) de la collerette (222).

6. Tête de soudage et/ou de découpe laser (20) selon l'une quelconque des revendications 1 à 5, dans lequel le système d'alignement (23) comprend un premier élément d'accouplement configuré pour s'accoupler à un deuxième élément d'accouplement de la buse de sortie (23) ceci de manière à autoriser une substitution de la buse de sortie (23) par une autre buse de sortie.

7. Unité de soudage et/ou de découpe laser (1) comprenant :
- une tête de soudage et/ou de découpe laser (20) selon l'une quelconque des revendications 1 à 6, dans laquelle le système optique (21) est couplé à une source laser de l'unité de soudage,
- un circuit de de commande (40) configuré pour commander la source laser (30).

8. unité de soudage et/ou de découpe laser (1) selon la revendication 7, dans lequel la tête de soudage et/ou de découpe laser (20) est une tête de soudage et de découpe laser (20) selon la revendication 7, la tête de soudage et/ou de découpe laser (20) étant l'une choisie parmi une tête de soudage et une tête de découpe, et l'unité de soudage et/ou de découpe (1) comprenant en outre une buse de sortie supplémentaire apte à fournir, lorsqu'elle est substituée à la buse de sortie une autre choisie parmi une tête de soudage et une tête de découpe, ladite buse de sortie supplémentaire étant munie d'un deuxième élément d'accouplement complémentaire au premier élément d'accouplement du système d'alignement.

9. Procédé de fabrication d'une tête de soudage et/ou de découpe laser (20) selon l'une quelconque des revendications 1 à 6, comprenant les étapes suivantes :
- fourniture du système optique (21),
- fourniture de la buse de sortie (22),
- fourniture du système d'alignement (23),
- assemblage du système optique (21) avec la buse de sortie au moyen du système d'alignement (23).

10. Procédé d'alignement d'une tête de soudage et/ou de découpe selon l'une quelconque des revendications 1 à 6, le procédé comprenant les étapes suivantes :
- fournir, au moyen du système optique (21) un rayonnement optique de relativement faible énergie vis-à-vis d'un rayonnement laser du système optique (21) apte à permettre une soudure et/ou une découpe,
- déplacement de la buse de sortie (22) par rapport au système optique (21), ceci au moyen de la liaison rotule fournie par ledit système d'alignement (23), pour aligner l'orifice de sortie (221) de la buse de sortie (22) avec l'axe optique du système optique (21),
- configuration du système optique (21) pour l'émission d'un rayonnement optique apte à permettre un soudage et/ou une découpe laser.

## Patentansprüche

1. Laserschweiß- und/oder -schneidkopf (20), enthaltend:
- ein optisches System (21), wie etwa einen optischen Block, das/der dazu angeordnet ist, eine Laserstrahlung bereitzustellen, die zum Schweißen und/oder Schneiden geeignet ist, wobei die Laserstrahlung am Ausgang des optischen Systems (21) entlang einer optischen Achse des optischen Systems (21) bereitgestellt wird,
- eine Auslassdüse (22), die am Ausgang des optischen Systems (21) angeordnet ist, um die Laserstrahlung mit zumindest einem Zusatzstoff, wie etwa Schweißmittel oder Neutralgas, an einer Auslassöffnung (221) der Auslassdüse (22) zu kombinieren,
- ein Ausrichtungssystem (23), das zwischen dem optischen System (21) und der Auslassdüse (22) angeordnet ist, um eine Ausrichtung der Auslassöffnung (221) der Auslassdüse (22) mit der optischen Achse des optischen Systems (21) zu ermöglichen,
wobei das Ausrichtungssystem (23) ein Kugelgelenk enthält, das die Auslassdüse (22) mit dem optischen System (21) verbindet, wobei das Zentrum des Kugelgelenks mit der der optischen Achse des optischen Systems (21) zusammenfällt,
wobei der Laserschweiß- und/oder -schneidkopf (20) **dadurch gekennzeichnet ist, dass** das Ausrichtungssystem (23) enthält:
- einen ersten Ring (231), der an dem optischen System (21) befestigt ist, wobei der erste Ring (231) eine dem optischen System (21) entgegengesetzte Außenfläche aufweist und eine erste sphärische Auflagefläche bildet,
- einen zweiten Ring (234), der an dem ersten Ring (231) befestigt ist und eine Innenfläche aufweist, die der Außenfläche gegenüberliegt und eine zweite sphärische Auflagefläche (235) bildet, die komplementär zu der ersten sphärischen Auflagefläche (232) ist,
wobei die Auslassdüse (22) an einem dem optischen System (21) gegenüberliegenden Ende einen Bund aufweist, der sich von der restlichen Auslassdüse (22) entlang einer sphärischen Ebene erstreckt, die derjenigen der ersten und zweiten sphärischen Auflagefläche entspricht, wobei der Bund (222) teilweise zwischen dem ersten und dem zweiten Ring in gleitender Anlage an jeder der ersten und zweiten sphärischen Auflagefläche (232, 235) aufgenommen ist.

2. Laserschweiß- und/oder -schneidkopf (20) nach Anspruch 1,
wobei einer aus erstem und zweitem Ring (231, 234) zumindest ein Sicherungselement enthält, das dazu ausgelegt ist, den Bund (222) an dem anderen aus zweitem und erstem Ring (234, 231) zu befestigen, indem es den Bund (222) in Anlage an einer sphärischen Auflagefläche aus erster und zweiter sphärischer Auflagefläche (231, 235) bringt, die dem anderen aus zweitem und erstem Ring (234, 231) entspricht.

3. Laserschweiß- und/oder -schneidkopf (20) nach Anspruch 2,
wobei das Sicherungselement zumindest eine Sicherungsschraube (237), vorzugsweise zumindest drei bzw. vier, enthält, die dazu ausgelegt ist, in Anlage an einer Fläche des Bunds (222) zu gelangen, die einem aus erstem und zweitem Ring (231, 234) gegenüberliegt, um den Bund (222) in Anlage an eine sphärische Auflagefläche aus erster und zweiter sphärischer Auflagefläche (231, 235) zu bringen, die dem anderen aus zweitem und erstem Ring (234, 231) entspricht.

4. Laserschweiß- und/oder -schneidkopf (20) nach Anspruch 2 oder 3,
wobei einer aus erstem und zweitem Ring (231, 234) der zweite Ring (234) ist und der andere aus zweitem und erstem Ring (234, 231) der erste Ring (231) ist.

5. Laserschweiß- und/oder -schneidkopf (20) nach einem der Ansprüche 1 bis 3,
wobei der Bund (222) in Anlage an jeder aus erster und zweiter sphärischer Auflagefläche (232, 235) mittels jeweiliger Anlageflächen (223a, 223b) ist, wobei der Bund (222) ferner eine radiale Fläche (224) aufweist, die im Wesentlichen senkrecht zu den Anlageflächen (223a, 223b) verläuft und der optischen Achse entgegengesetzt ist,
wobei ein erster aus erstem und zweitem Ring (231, 234) mit vier in Umfangsrichtung gegenüber der radialen Fläche (224) des Bundes (222) verteilten Einstellschrauben (239) versehen ist, wobei die Einstellschrauben in Anlage an die radiale Fläche (224) des Bundes (222) gelangen.

6. Laserschweiß- und/oder -schneidkopf (20) nach einem der Ansprüche 1 bis 5,
wobei das Ausrichtungssystem (23) ein erstes Kopplungselement enthält, das dazu ausgelegt ist, mit einem zweiten Kopplungselement der Auslassdüse (23) gekoppelt zu werden, so dass die Auslassdüse (23) durch eine andere Auslassdüse ersetzt werden kann.

7. Laserschweiß- und/oder -schneideinheit (1), enthaltend:
- einen Laserschweiß- und/oder -schneidkopf (20) nach einem der Ansprüche 1 bis 6, wobei das optische System (21) mit einer Laserquelle der Schweißeinheit gekoppelt ist,
- eine Steuerschaltung (40), die zur Steuerung der Laserquelle (30) ausgelegt ist.

8. Laserschweiß- und/oder -schneideinheit (1) nach Anspruch 7,
wobei der Laserschweiß- und/oder -schneidkopf (20) ein Laserschweiß- und/oder -schneidkopf (20) nach Anspruch 7 ist, wobei der Laserschweiß- und/oder -schneidkopf (20) ausgewählt ist aus einem Schweißkopf und einem Schneidkopf, und die Schweiß- und/oder Schneideinheit (1) ferner eine zusätzliche Auslassdüse aufweist, die dazu ausgelegt ist, bei Auswechseln gegen die Auslassdüse einen anderen aus Schweißkopf und Schneidkopf bereitzustellen, wobei die zusätzliche Auslassdüse mit einem zweiten Kopplungselement versehen ist, das komplementär zu dem ersten Kopplungselement des Ausrichtungssystems ist.

9. Verfahren zur Herstellung eines Laserschweiß- und/oder -schneidkopfes (20) nach einem der Ansprüche 1 bis 6, umfassend die folgenden Schritte:
- Bereitstellen des optischen Systems (21),
- Bereitstellen der Auslassdüse (22),
- Bereitstellen des Ausrichtungssystems (23),
- Zusammenfügen des optischen Systems (21) mit der Auslassdüse mittels des Ausrichtungssystems (23).

10. Verfahren zum Ausrichten eines Schweiß- und/oder Schneidkopfes nach einem der Ansprüche 1 bis 6, wobei das Verfahren die folgenden Schritte umfasst:
- mittels des optischen Systems (21) Bereitstellen einer zum Schweißen und/oder Schneiden geeigneten optischen Strahlung mit relativ geringer Energie im Vergleich zu einer Laserstrahlung des optischen Systems (21),
- Bewegen der Auslassdüse (22) relativ zu dem optischen System (21) mittels des Kugelgelenks, das von dem Ausrichtungssystem (23) bereitgestellt wird, um die Auslassöffnung (221) der Auslassdüse (22) mit der optischen Achse des optischen Systems (21) auszurichten,
- Auslegen des optischen Systems (21) für die Emission von optischer Strahlung, die zum Laserschweißen und/oder -schneiden geeignet ist.

## Claims

1. Laser welding and/or cutting head (20) comprising:
- an optical system (21), such as an optical unit, arranged to supply a laser radiation capable of enabling welding and/or cutting, the laser radiation being supplied at the output of the optical system (21) along an optical axis of the optical system (21),
- an output nozzle (22) arranged at the output of the optical system (21) to combine the laser radiation with at least one additive, such as solder or an inert gas at an output orifice (221) of the output nozzle (22),
- an alignment system (23) arranged between the optical system (21) and the output nozzle (22) to enable an alignment of the output orifice (221) of the output nozzle (22) with the optical axis of the optical system (21),
the alignment system (23) comprising a ball-joint link linking the output nozzle (22) to the optical system (21) with the centre of the ball joint which is merged with the optical axis of the optical system (21),
the laser welding and/or cutting head (20) being **characterised in that** the alignment system (23) comprises:
- a first ring (231) attached to the optical system (21), said first ring (231) comprising an outer face opposite the optical system (21) and forming a first spherical bearing area,
- a second ring (234) attached to the first ring (231) and comprising an inner face facing the outer face and forming a second spherical bearing area (235) complementary to the first spherical bearing area (232),
wherein the output nozzle (22) comprises on an end facing the optical system (21) a flange extending from the rest of the output nozzle (22) along a spherical plane corresponding to that of the first and the second spherical bearing area, the flange (222) being partially housed between the first and the second ring slidably bearing on each of the first and second spherical bearing areas (232, 235).

2. Laser welding and/or cutting head (20) according to claim 1, wherein, one of the first and the second ring (231, 234) comprises at least one locking element configured to attach the flange (222) to the other of the second and the first ring (234, 231) by placing the flange (222) bearing on the spherical bearing area of the first and the second spherical bearing area (231, 235) which corresponds to the other of the second and the first ring (234, 231).

3. Laser welding and/or cutting head (20) according to claim 2, wherein the locking element comprises at least one locking screw (237) preferably at least three, or four, configured to bear upon a face of the flange (222) which is facing one of the first and the second ring (231, 234) in order to place the flange (222) bearing on the spherical bearing area of the first and the second spherical bearing area (231, 235) which corresponds to the other of the second and the first ring (234, 231).

4. Laser welding and/or cutting head (20) according to claim 2 or 3, wherein one of the first and the second ring (231, 234) is the second ring (234), the other of the second and the first ring (234, 231) being the first ring (231).

5. Laser welding and/or cutting head (20) according to any one of claims 1 to 3, wherein the flange (222) is bearing on each of the first and the second spherical bearing area (232, 235) by means of respective bearing surfaces (223a, 223b), the flange (222) further comprising a radial surface (224) substantially perpendicular to the bearing surfaces (223a, 223b) and opposite the optical axis,
wherein a first of the first and the second ring (231, 234) is provided with four setting screws (239) distributed circumferentially facing the radial surface (224) of the flange (222), said setting screws bearing upon the radial surface (224) of the flange (222).

6. Laser welding and/or cutting head (20) according to any one of claims 1 to 5, wherein the alignment system (23) comprises a first coupling element configured to couple with a second coupling element of the output nozzle (23) in such a way as to allow a substitution of the output nozzle (23) by another output nozzle.

7. Laser welding and/or cutting unit (1) comprising:
- a laser welding and/or cutting head (20) according to any one of claims 1 to 6, wherein the optical system (21) is coupled with a laser source of the welding unit,
- a control circuit (40) configured to control the laser source (30).

8. Laser welding and/or cutting unit (1) according to claim 7, wherein the laser welding and/or cutting head (20) is a laser welding and cutting head (20) according to claim 7, the laser welding and/or cutting head (20) being selected from a welding head and a cutting head, and the welding and/or cutting unit (1) further comprising an additional output nozzle capable of supplying, when it takes the place of the output nozzle, another selected from a welding head and a cutting head, said additional output nozzle being provided with a second coupling element complementary to the first coupling element of the alignment system.

9. Method for manufacturing a laser welding and/or cutting head (20) according any one of claims 1 to 6, comprising the following steps:
- providing the optical system (21),
- providing the output nozzle (22),
- providing the alignment system (23),
- assembling the optical system (21) with the output nozzle by means of the alignment system (23).

10. Method for aligning a welding and/or cutting head according to any one of claims 1 to 6, comprising the following steps:
- supplying, by means of the optical system (21), a relatively low-energy optical radiation with respect to a laser radiation of the optical system (21) capable of enabling welding and/or cutting,
- moving the output nozzle (22) relative to the optical system (21), by means of the ball-joint link supplied by said alignment system (23), to align the output orifice (221) of the output nozzle (22) with the optical axis of the optical system (21),
- configuring the optical system (21) for the emission of an optical radiation capable of enabling laser welding and/or cutting.
